(19) Europäisches Patentamt
European Patent Office
Office européen des brevets

(11) **EP 4 393 967 A1**

(12) **EUROPEAN PATENT APPLICATION**

(43) Date of publication:
**03.07.2024   Bulletin 2024/27**

(21) Application number: **22216787.6**

(22) Date of filing: **27.12.2022**

(51) International Patent Classification (IPC):
*C08F 110/02* $^{(2006.01)}$     *C08F 210/16* $^{(2006.01)}$
*C08L 23/08* $^{(2006.01)}$

(52) Cooperative Patent Classification (CPC):
(C-Sets available)
**C08F 110/02; C08F 210/16; C08L 23/06**     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventor: **BURYAK, Andrey**
**4021 Linz (AT)**

(74) Representative: **Kador & Partner Part mbB**
**Corneliusstraße 15**
**80469 München (DE)**

(54) **PE100-RC WITH BUTENE AS COMONOMER**

(57)     A polyethylene composition comprising a base resin which comprises from 42 to 48 wt. % of a first ethylene homo- or copolymer fraction (A), and from 52 to 58 wt. % of a second ethylene copolymer fraction (B), wherein fraction (A) has a lower weight-average molecular weight than fraction (B); wherein fraction (B) comprises from 1.2 to 1.6 mol% of 1-butene as a comonomer; and wherein the composition has a number average molecular weight of from 6000 to 10000 g/mol. A process for producing said polyethylene composition, its use and an article comprising the same.

**EP 4 393 967 A1**

(52) Cooperative Patent Classification (CPC): (Cont.)

C-Sets
**C08F 110/02, C08F 4/6492;**
**C08F 210/16, C08F 2/001;**
**C08F 210/16, C08F 4/652;**
**C08L 23/06, C08L 23/0815;**
C08F 110/02, C08F 2500/02, C08F 2500/12;
C08F 210/16, C08F 210/08, C08F 2500/12,
C08F 2500/17, C08F 2500/27;
C08F 210/16, C08F 210/08, C08F 2500/27

**Description**

**Field of the invention**

The present invention relates to a polyethylene composition, a process for producing the same, an article - in particular a polyethylene pipe or fitting - comprising the polyethylene composition as well as the use of the polyethylene composition for increasing slow crack resistance of a pipe or fitting.

**Background**

Nowadays, pipes of polymer material are frequently used for various purposes, such as fluid transport, i.e. transport of liquid or gas, e.g. water or natural gas, during which the fluid can be pressurized. Moreover, the transported fluid may have varying temperatures, usually within the temperature range from about 0 °C to about 50 °C. Such pressure pipes are preferably made of polyolefin plastic, such as medium density polyethylene (MOPE; density: 0.930-0.942 g/cm$^3$) and high density polyethylene (HDPE; density: 0.945-0.965 g/cm$^3$). By the expression "pressure pipe" herein is meant a pipe which, when used, is subjected to a positive pressure, i.e. the pressure inside the pipe is higher than the pressure outside the pipe.

Polymer pipes, are often manufactured by extrusion, and pipe fittings by injection molding. The properties of such conventional polymer parts produced by extrusion or injection molding are sufficient for many purposes, although enhanced properties may be desired, for instance in applications requiring high pressure resistance, i.e. pipes that are subjected to an internal fluid pressure for a long and/or short period of time. A common standard for expressing pressure resistance of PE 100 pipes according to the design stress rating, is measured according to ISO 9080:2003.

WO 00/22040 discloses pipes made from a bimodal resin which exhibit good mechanical properties.

Usually, PE100 resins with high crack resistance comprise 1-hexene or 1-octene rather than 1-butene as a comonomer to improve slow crack growth resistance. However, in order to have greater flexibility with regard to production processes, it would be beneficial to have access to crack resistant PE100 resins comprising 1-butene as a comonomer.

**Object of the invention**

It is therefore an objective of the present invention to provide a polyethylene composition, especially comprising 1-butene as a comonomer, suitable for the preparation of pressure pipes exhibiting improved slow crack growth resistance while complying with the requirements for PE100 standards.

**Summary of the invention**

It is the finding of the present invention that the above objectives can be achieved by providing a polyethylene composition comprising a base resin which comprises from 42 to 48 wt.% of a first ethylene homo- or copolymer fraction (A), and from 52 to 58 wt.% of a second ethylene copolymer fraction (B), based on the total weight of the base resin; wherein fraction (A) has a lower weight-average molecular weight than fraction (B); wherein fraction (B) comprises from 1.2 to 1.6 mol% of 1-butene as a comonomer based on the total amount of fraction (B); and wherein the base resin has a number average molecular weight of from 6000 to 10000 g/mol determined by Gel Permeation Chromatography (GPC) according to ISO 16014-4:2003 and ASTM D 6474-99.

Such a polyethylene composition is obtainable by a process for producing a polyethylene composition comprising the steps of a) polymerizing in a first step ethylene and, optionally one or more alpha-olefin comonomers, in the presence of a polymerization catalyst to obtain a first ethylene homo- or copolymer fraction (A); and b) polymerizing in a second step ethylene and one or more alpha-olefin comonomers, in the presence of a polymerization catalyst to obtain a second ethylene copolymer fraction (B) having a higher weight average molecular weight than fraction (A); wherein the first polymerization step (a) and the second polymerization step (b) are conducted in any order.

The above objectives can further be achieved by the use of the above polyethylene composition for the production of an article, preferably a pipe or fitting.

**Detailed description of the invention**

The polyethylene composition of the present invention is characterized in that it is suitable for producing polyethylene pipes with substantially improved slow crack growth resistance, determined by notched pipe testing (NPT) according to ISO 13479-2009.

Pipes made from the polyethylene composition of the present invention preferably withstand a pressure of 9.2 bars at a temperature of 80°C for more than 8760 hours (more than one year), more preferably for more than 10000 hours and even more preferably for more than 12000 hours, before failure.

Preferably, the polyethylene composition of the present invention is suitable for producing polyethylene pipes having a short term pressure resistance (STPR) measured according to ISO 1167-1:2006 at 20 °C and a stress level of 12.4 MPa of at least 50 hours, more preferably at least 60 hours and even more preferably at least 65 hours.

The polyethylene composition of the present invention preferably is suitable for producing polyethylene pipes having a short term pressure resistance (STPR) measured according to ISO 1167-1:2006 at 80°C and a stress level of 5.5 MPa of at least 150 hours, more preferably at least 175 hours and even more preferably at least 185 hours.

Pipes obtained from the composition according to the present invention exhibit excellent pressure resistance (according to ISO 1167-1:2006 at the above conditions). Thus an improved ratio between pressure resistance and slow crack growth resistance can be achieved by using the composition of the present invention.

At the same time the polyethylene composition of the present invention exhibits excellent rapid crack propagation resistance expressed by the critical temperature $T_{crit}$ in the S4 test according to ISO 13477:2008 of less than -5 °C, preferably less than -8 °C, even more preferably less than -10 °C.

The composition of the present invention further exhibits a slow crack growth resistance, determined on compression moulded specimen according to the PENT testing procedure at 2.8 MPa and 80 °C of preferably at least 7500 hours, more preferably at least 7600 hours, even more preferably at least 7844 hours.

The molecular weight and molecular weight distribution (determined as detailed below) are important properties of the polyethylene composition according to the invention. In this regard, it is noted that the expression "molecular weight" relates to the weight average molecular weight unless otherwise specified.

The polyethylene composition of the present invention has a number average molecular weight (Mn) in a range of from 6000 to 10000 g/mol, preferably of from 6500 to 9500 g/mol, more preferably of from 7000 to 9000 g/mol and even more preferably of from 7500 to 8500 g/mol.

The polyethylene composition of the present invention preferably has a weight average molecular weight (Mw) in a range of from 100 to 400 kg/mol, more preferably of from 110 to 310 kg/mol and even more preferably of from 165 to 265 kg/mol.

The polyethylene composition of the present invention preferably has a z-average molecular weight (Mz) in a range of from 700 to 1100 kg/mol, more preferably of from 800 to 1000 kg/mol and even more preferably of from 850 to 950 kg/mol.

Moreover, the polyethylene composition of the present invention preferably has a ratio Mz to Mw in a range of from 1.0 to 8.0, more preferably of from 2.0 to 7.0 and even more preferably of from 3.0 to 6.0.

The polyethylene composition of the present invention preferably has a ratio Mw to Mn in a range of from 20.0 to 32.0, more preferably of from 22.0 to 30.0 and even more preferably of from 24.0 to 28.0.

The melt flow rate (MFR) is another important property of the polyethylene composition according to the invention. The MFR is determined according to ISO 1133 and is indicated in g/10 min. The MFR is an indication of the flowability, and hence the processability, of the polymer. The higher the melt flow rate, the lower the viscosity of the polymer. The MFR is determined at different loadings such as 2.16 kg (MFR2; ISO 1133, condition D), 5 kg (MFR5; ISO 1133, condition T) or 21.6 kg (MFR21; ISO 1133, condition G).

According to the present invention it has now been surprisingly found that a superior performance of short term pressure resistance, slow crack growth resistance and rapid crack propagation resistance can be achieved, if the melt flow rate of the polyethylene composition is reduced to certain limits.

Preferably, the MFR5 of the polyethylene composition according to the present invention is in a range of from 0.15 to 0.30 g/ 10min, more preferably in a range of from 0.15 to 0.25 g/10 min, and even more preferably in a range of from 0.15 to 0.20 g/10 min.

The object of the invention can also be achieved by adjusting the MFR21 of the polyethylene composition to decreased ranges. Preferably, the MFR21 of the polyethylene composition according to the present invention is in a range of from 1.0 to 10.0 g/10 min, more preferably from 2.0 to 7.0 g/10 min, even more preferably from 3.0 to 6.0 g/10 min.

The polyethylene composition according to the present invention is preferably further characterized by a white spot rating (WSR) in a range of from 0.0 to 8.0, more preferably of from 0.0 to 6.0 and even more preferably of from 0.0 to 4.0.

The polyethylene composition according to the present invention preferably has a viscosity at a constant shear stress of 747 Pa (eta747) of 400 kPa*s or more, more preferably in a range of from 400 kPa*s to 1000 kPa*s, even more preferably in a range of from 600 to 850 kPa*s, and most preferably of from 650 to 800 kPa*s. The value for eta747 is an indication for the sagging properties of the pipes.

The polyethylene composition according to the present invention preferably has a shear thinning index SHI (2,7/210) determined as detailed below in a range of from 30 to 50, more preferably of from 35 to 45 and even more preferably of from 38 to 43.

The polyethylene composition according to the present invention preferably has a polydispersity index (PI) determined as detailed below in a range of from 1.0 to 4.5 Pa$^{-1}$, more preferably of from 1.5 to 4.0 Pa$^{-1}$ and even more

preferably of from 2.0 to 3.0 Pa$^{-1}$.

Furthermore, the polyethylene composition according to the present invention preferably has a crystallization half time at 123°C determined as detailed herein below of at least 10 minutes, more preferably of at least 15 minutes and even more preferably of at least 20 minutes.

The polymer fraction (A) may be either a polyethylene homo- or copolymer, preferably polymer fraction (A) is an ethylene homopolymer. Polymer fraction (A) preferably has a weight average molecular weight in a range of from 10.0 to 30.0 kg/mol, more preferably of from 15.0 to 25.0 kg/mol and even more preferably of from 19.0 to 24.0 kg/mol, calculated as detailed herein below.

Moreover, the polymer fraction (A) preferably has a MFR2 in a range of from 50 to 1000 g/10min, more preferably of from 200 to 800 g/10min and even more preferably of from 400 to 600 g/10min.

Polymer fraction (B) which constitutes the high molecular weight (HMW) component of the polyethylene composition is a copolymer of ethylene and 1-butene and comprises from 1.2 to 1.6 mol% of 1-butene, based on the total amount of fraction (B). Polymer fraction (B) preferably has a weight average molecular weight in a range of from 200 to 500 kg/mol, more preferably in a range of from 250 to 450 kg/mol and even more preferably of from 300 to 400 kg/mol, calculated as detailed herein below.

Preferably, polymer fraction (B) is monomodal.

The density of the polyethylene base resin may lie in the medium to high density range, preferably in the range 930-960 kg/m$^3$, more preferably in the range of 940-960 kg/m$^3$ and even more preferably in the range of 942 to 950 kg/m$^3$.

The density of the polyethylene composition after compounding preferably lies in a range of from 930 to 970 kg/m$^3$, more preferably of from 940 to 965 kg/m$^3$ and even more preferably of from 945 to 960 kg/m$^3$.

In addition to the base resin, usual additives for utilization with polyolefins, such as pigments, stabilizers (antioxidant agents), antacids and/or anti-UVs, antistatic agents and utilization agents (such as processing aid agents) may be present in the polyethylene composition preferably, the amount of these additives is 10 wt% or below, further preferred 8 wt% or below, still more preferred 4 wt% or below of the total composition. The composition may comprise carbon black in an amount of 8 wt% or below, further preferred of 1 to 4 wt%, of the total composition.

It should be noted that the polyethylene composition of the present invention is characterised, not by any single one of the above defined features, but by the combination of all the features defined in claim 1. By this unique combination of features it is possible to obtain pressure pipes of superior performance, particularly with regard to pressure resistance according to ISO 1167-1:2006, slow crack growth resistance and rapid crack propagation resistance.

The polyethylene composition of the present invention is specifically designed for the manufacture of pressure pipes. For this purpose the composition may preferably be a multimodal polyethylene, more preferably a bimodal polyethylene. The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The multimodal polyethylene composition and/ or the base resin may comprise a low molecular weight (LMW) ethylene homopolymer fraction and a high molecular weight (HMW) ethylene copolymer fraction. Depending on whether the multimodal polyethylene is bimodal or has a higher modality the LMW and HMW fractions may comprise only one fraction each or include sub-fractions, i.e. the LMW may comprise two or more LMW sub-fractions and similarly the HMW fraction may comprise two or more HMW sub-fractions. In particular, an (optional) polymer fraction obtained during prepolymerization may be comprised in the LMW fraction. Thus, the LMW fraction comprises at least fraction (A) and, optionally, a fraction obtained during prepolymerization. According to preferred embodiments, the LMW fraction is an ethylene homopolymer and the HMW fraction is an ethylene copolymer, i.e. it is only the HMW fraction that includes a comonomer. As a matter of definition, the expression "ethylene homopolymer" used herein relates to an ethylene polymer that consists substantially, i.e. to at least 97% by weight, preferably at least 99% by weight, more preferably at least 99.5% by weight, and most preferably at least 99.8% by weight of ethylene and thus is an HD ethylene polymer which preferably only includes ethylene monomer units.

In the present invention the proportions of the LMW and HMW fractions (also known as the "split" between the fractions) are selected properly. More particularly, the weight ratio of the LMW fraction to the HMW fraction is in a range of (42-48):(52-58), preferably (43-47):(53-57), more preferably (43-46):(54-57) based on the total weight of the base resin. If the split lies within these ranges, the proportion of the HMW fraction results in a low amount of white spots.

Importantly, in this invention, the indication of the weight amount of fraction (A) includes the weight amount of the prepolymer fraction, if not indicated as an individual fraction. This also applies to the indications of the weight ratios between fractions (A) and (B).

Moreover, in this invention, the expression "HMW fraction" relates to the second ethylene copolymer fraction (B). The expression "LMW fraction" relates to the first ethylene homo- or copolymer fraction (A), optionally comprising a prepolymer fraction. Thus, in the embodiments of the invention, said second ethylene copolymer fraction (B) (HMW fraction) has a higher molecular weight than the first ethylene homo- or copolymer fraction (A) (LMW fraction).

The polyethylene compositions of the present invention are usually made by a multi-stage process, i.e. a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homo-polymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

Multimodal polyethylene compositions of the present invention are preferably produced in a multistage process, where lower molecular weight and higher molecular weight polymers (components) are produced in different polymerization steps, in any order.

A relatively low density (or HMW fraction) copolymer can be prepared in the first polymerization step and the relatively high density (or LMW fraction) polymer in the second polymerization step. This can be referred to as the reverse mode. Alternatively, the low molecular weight polymer can be prepared in the first polymerization step and the high molecular weight copolymer in the second polymerization step. This can be referred to as the normal mode and is preferred.

A two-stage process can, for example be a slurry-slurry or a gas phase-gas phase process, particularly preferably a slurry-gas phase process. Optionally the process according to the invention can comprise one or two additional polymerization steps.

These optional one or two additional polymerization steps preferably comprise gas phase polymerization steps.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

The slurry and gas phase processes are well known and described in the prior art.

In a preferred embodiment of the invention the LMW fraction is produced first and the HMW fraction is produced in the presence of LMW fraction. In this case the LMW fraction is the first polyethylene fraction (A) and the HMW fraction is the second polyethylene fraction (B).

The polymerisation catalysts for the production of the base resin may include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a MgCl2-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. Particularly preferred Ziegler-Natta catalysts comprise Lynx 200, commercially available from Grace.

The resulting end product consists of an intimate mixture of the polymers from the reactors, the different molecular-weight-distribution curves of these polymers together forming a molecular-weight-distribution curve having a broad maximum or several maxima, i.e. the end product is a multimodal polymer mixture.

It is preferred that the multimodal polyethylene composition according to the invention is a bimodal polyethylene mixture consisting of polymer fractions (A) and (B), optionally further comprising a small prepolymerisation fraction. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100 °C, and most preferably is 82 to 97 °C. The pressure in the loop reactor is typically from 1 to 150 bar, preferably from 1 to 100 bar and the pressure in the gas phase reactor is typically at least 10 bar, preferably at least 15 bar but typically not more than 30 bar, preferably not more than 25 bar.

The polymerisation in the slurry phase reactor usually takes place in an inert diluent, typically a hydrocarbon diluent which is selected from a group comprising C3 to C8 hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

The ethylene content in the fluid phase of the slurry in the slurry phase reactor may be from 0.5 to 50 % by mole, preferably from 1 to 20 % by mole, and in particular from 2 to 10 % by mole.

In a preferred embodiment of a gas phase reactor, the polymerization takes place in a fluidised bed gas phase reactor where an olefin is polymerised in the presence of a polymerisation catalyst in an upwards moving gas stream. The reactor typically contains a fluidised bed comprising the growing polymer particles containing the active catalyst located above a fluidisation grid. The polymer bed is fluidised with the help of a fluidisation gas comprising the olefin monomer, eventually comonomer(s), eventually chain growth controllers or chain transfer agents, such as hydrogen, and eventually inert gas.

Also antistatic agent(s) may be introduced into the gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

The polymerization process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry.

Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C and more preferably from 40 °C to 70 °C.

The pressure is not critical and is typically from 1 bar to 150 bar, preferably from 10 bar to 100 bar.

A chain-transfer agent, preferably hydrogen, is added as required to the reactors, and preferably 200 to 800 moles of H2/kmoles of ethylene are added to the reactor, when the LMW fraction is produced in this reactor, and 0 to 50 moles of H2/kmoles of ethylene are added to the gas phase reactor when this reactor is producing the HMW fraction.

The term "base resin" means the entirety of polymeric components in the polyethylene composition according to the invention, usually making up at least 90 wt% of the total composition. Preferably, the base resin is consisting of polymer fractions (A) and (B), optionally further comprising a prepolymer fraction in an amount of up to 20 wt%, more preferably up to 10 wt%, and most preferably up to 5 wt% of the total base resin. It is therefore pointed out that relative qualities of the polymeric components of the composition, such as the weight ratio of a high molecular weight fraction to a low molecular weight fraction, the ratio Mn to Mw and/ or Mw to Mz and similar, may be assumed to be the same for the base resin and the polyethylene composition.

Optionally, additives or other polymer components can be added to the composition during the compounding step in the amount as described above. Preferably, the composition of the invention obtained from the reactor is compounded in the extruder together with additives in a manner known in the art.

The composition of the invention, preferably if produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 100 kg/h to 500 kg/h, more preferably 150 kg/h to 300 kg/h.

The screw speed of the extruder is preferably 200 rpm to 500 rpm, more preferably 300 rpm to 450 rpm.

Preferably, in said extrusion step the SEI (specific energy input) of the extruder may be 100 kWh/ton to 400 kWh/ton, more preferably 200 kWh/ton to 300 kWh/ton.

The melt temperature in said extrusion step is preferably 200°C to 300°C, more preferably 230°C to 270°C.

In certain embodiments of the invention the above extrusion condition may also deviate from the above ranges.

Furthermore, the present invention relates to an article, preferably a pipe or a fitting, comprising the polyethylene composition of the invention or obtainable by a multi-stage process as described above, and to the use of such a polyethylene composition for the production of an article, preferably a pipe or a fitting.

**Examples**

Measurement methods

a) Molecular weight properties

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N}(A_i \ x \ M_i)}{\sum A_i}$$

$$M_z = \frac{\sum_{i=1}^{N}(A_i \ x \ M_i^2)}{\sum (A_i/M_i)}$$

For a constant elution interval $\Delta V_i$, where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 µL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

b) Density

Density of the polymer was measured according to ISO 1183-1:2004 (method A) on compression moulded specimen prepared according to EN ISO 1872-2 (Feb 2007) and is given in $kg/m^3$.

c) Measurement of melt flow rate MFR

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg (MFRs) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$.

d) Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813; Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201) and all contents calculated with respect to all other monomers present in the polymer.

Characteristic signals resulting from isolated 1-butene incorporation i.e. EE-BEE comonomer sequences, were observed. Isolated 1-butene incorporation was quantified using the integral of the signal at 34.23 ppm assigned to the $\alpha B2$ sites accounting for the number of reporting sites per comonomer:

$$B = (1/2)*I_{\alpha B2}$$

With no other signals indicative of other comonomer sequences, i.e. consecutive comonomer incorporation observed, the total 1-butene comonomer content was calculated based solely on the amount of isolated 1-butene sequences:

$$B_{total} = B$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*(I_{2S} + I_{3S})$$

Characteristic signals resulting from unsaturated vinyl end-groups were also observed. The content of such unsaturated end-groups was quantified using the integral of the signals at 33.93 ppm assigned to the $\alpha U$ sites:

$$U = I_{\alpha U}$$

The relative content of ethylene was quantified using the integral of the bulk methylene ($\delta+$) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (3/2)*S + (3/2)*U$$

The total mole fraction of 1-butene in the polymer was then calculated as:

$$fB = ( B_{total} / ( E_{total} + B_{total} )$$

The total comonomer incorporation of 1-butene in mole percent was calculated from the mole fraction in the usual manner:

$$B\ [mol\%] = 100 * fB$$

The total comonomer incorporation of 1-butene in weight percent was calculated from the mole fraction in the standard manner:

$$B\ [wt\%] = 100 * ( fB * 56.11) / ( (fB * 56.11) + ((1-fB) * 28.05) )$$

e) Isothermal Crystallisation by DSC

Experiments were run on a TA Instruments Q2000 device calibrated with Indium, Zinc, and Tin according to ISO 11357-1. The measurements were run under nitrogen atmosphere (50 mL min-1) on 5$\pm$1 mg samples. The temperature was first raised to 180°C at 10°C/min, and kept constant for 10 minutes in order to delete the previous thermal history. The temperature was then brought to 123°C at 80°C/min, and a long isothermal step was then used to study the crystallization. The DSC trace was analysed according to ISO 11357-7, delivering results as the time to reach the maximum of the exothermic peak or the half time of crystallization.

f) Rheology

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression molded plates, using nitrogen atmosphere and setting a strain within the linear viscoelastic regime. The oscillatory shear tests were done at a temperature of 190°C applying a frequency range between 0.01 and 628 rad/s and setting a gap of 1.3 mm.
In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad\qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively,

$\omega$ is the angular frequency,

$\delta$ is the phase shift (loss angle between applied strain and stress response),

t is the time.

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta"$ and the loss tangent, tan $\delta$ which can be expressed as follows:

$$G' = \frac{\sigma_0}{\gamma_0}\cos\delta \ [\text{Pa}] \qquad (3)$$

$$G'' = \frac{\sigma_0}{\gamma_0}\sin\delta \ [\text{Pa}] \qquad (4)$$

$$G^* = G' + iG'' \ [\text{Pa}] \qquad (5)$$

$$\eta^* = \eta' - i\eta'' \ [\text{Pa.s}] \qquad (6)$$

$$\eta' = \frac{G''}{\omega} \ [\text{Pa.s}] \qquad (7)$$

$$\eta'' = \frac{G'}{\omega} \ [\text{Pa.s}] \qquad (8)$$

The values of storage modulus (G'), loss modulus (G"), complex modulus (G*) and complex viscosity ($\eta^*$) were obtained as a function of frequency ($\omega$). Thereby, e.g. $\eta^*_{0.05 \ rad/s}$ (eta*$_{0.05 \ rad/s}$) is used as abbreviation for the complex viscosity at the frequency of 0.05 rad/s or $\eta^*_{300 \ rad/s}$ (eta*$_{300 \ rad/s}$) is used as abbreviation for the complex viscosity at the frequency of 300 rad/s.

*SHI:*

Shear thinning index (SHI), which correlates with MWD and is independent of $M_w$, was obtained by calculating the complex viscosities at given values of complex modulus and calculating the ratio of the two viscosities. For example, using the values of complex modulus of 2.7 kPa and 210 kPa, then $\eta^*$(2.7 kPa) and $\eta^*$(210 kPa) are obtained at a constant value of complex modulus of 2.7 kPa and 210 kPa, respectively. The shear thinning index $SHI_{2.7/210}$ is then defined as the ratio of the two viscosities $\eta^*$(2.7 kPa) and $\eta^*$(210 kPa), i.e. $\eta$(2.7)/$\eta$(210). In case that viscosity data are not available at the given complex modulus of 2.7 kPa or 210 kPa, single point interpolation with an activated extrapolation option was done with the software Rheoplus from Anton Paar Germany GmbH.

*PI:*

The polydispersity index, *PI*, is defined by equation:

$$PI = \frac{10^5}{G'(\omega_{COP})}, \quad \omega_{COP} = \omega \; for \; (G' = G'')$$

where, $\omega_{COP}$ is the cross-over angular frequency, determined as the angular frequency for which the storage modulus, G' equals the loss modulus, G".

_Eta<sub>747</sub>:_ _Eta_$_{747}$_:_

One method which correlates well with the sagging properties, and is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. A 1.2 mm thick polymer sample is inserted between the plates.

The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

g) White spot rating (WSR)

A sample of the composition (including a pigment to make the inhomogeneities visible, i.e. carbon black) is obtained after the compounding step. Microtome cuts with a thickness of about 10 $\mu$m were made from 6 pellets of the respective sample perpendicular to extrusion direction. The microtome cuts were characterized by light microscopy (ZEISS microscope Axioimager) to get white spot rating according to ISO 18553.

h) Rapid crack propagation

The rapid crack propagation (RCP) resistance of a pipe may be determined according to a method called the S4 test (Small Scale Steady State), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurized internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/-1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test where the crack propagation exceeds 4.7 times the pipe diameter.

The critical temperature ($T_c$) i.e. the ductile brittle transition temperature as measured according to ISO 13477:2008 is the lowest temperature at which the pipe passes the test. The lower the critical temperature the better, since it results in an extension of the applicability of the pipe.

i) Pressure test on notched pipes (NPT)

The slow crack propagation resistance is determined according to ISO 13479-2009 in terms of the number of hours the pipe withstands a certain pressure at a certain temperature before failure. The pressure test is carried out on notched SDR11 pipes having an outer diameter of 110 mm. A pressure of 9.2 bars and a temperature of 80 °C have been used. Notching is made with a climb milling cutter with a 60° included-angle V-cutter conforming to ISO 6108, having a cutting rate of 0.010 ± 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference.

The length of the notch is 110 ± 1 mm.

$$h = 0.5\left[d_{em} - \sqrt{(d_{em}^2 - b_s^2)}\right] + 0.866 b_s$$

where

$b_s$: is the width of machined surface of the notch, in millimeters;
$d_{em}$: is the measured mean pipe outside diameter, in millimeters.

j) Slow crack growth resistance

The slow crack propagation resistance is determined according to the PENT test procedure (ASTM F 1473-01) at a stress of 2.8 MPa at 80 °C. From a compression moulded plate with a thickness of 10mm using the conditions defined in chapter 3.3 of EN ISO 1872-2 (Feb 2007) a rectangular specimen 60x25mm with a thickness of 10mm is machined out. This rectangular specimen is notched according the procedure described in ASTM F1473-01. One end of the rectangular specimen is fixed in position while a load (dead weight) is hung from the other end. The primary purpose of the notch is to introduce a triaxial stress state at the notch tip to ensure a brittle slow crack growth fracture mode. The outcome of this test is the time to failure or the time it takes for the two halves of the specimen to fully separate or reach a separation of 0.5 inches, whichever comes first.

k) Short term pressure resistance (STPR)

The pressure test on un-notched 32 mm SDR 11 pipes having a length of 450 mm is carried out in water-inside and water-outside environment according to ISO 1167-1:2006. End caps type A were used. The time to failure is determined in hours. A hoop stress of 12.4 MPa and a temperature of 20 °C were applied in a first series of tests. Moreover, a hoop stress of 5.5 MPa and a temperature of 80°C were applied in a second series of tests.

Polyethylene compositions and pipes comprising carbon black

*Polymerization of the polyethylene base resins*

Polyethylene base resins and compositions according to the invention (IE1) and for comparison (CE1 to CE9) were produced using Lynx200, Ziegler-Natta catalyst supplied by Grace.

Inventive example 1 (IE1)

A loop reactor having a volume of 50 dm³ was operated at a temperature of 60 °C and a pressure of 60 bar. Into the reactor were fed ethylene, propane diluent and hydrogen. Also a solid polymerization catalyst component A produced as described above was introduced into the reactor together with triethylaluminium cocatalyst so that the molar ratio of Al/Ti was about 15 mol/mol. The estimated production split was 2.4 wt%.

A stream of slurry was continuously withdrawn and directed to a loop reactor having a volume of 150 dm³ and which was operated at a temperature of 95 °C and a pressure of 56 bar. Into the reactor were further fed additional ethylene, propane diluent and hydrogen so that the ethylene concentration in the mixture was 5.2 % by mole and the hydrogen to ethylene ratio was 716 mol/kmol. The estimated production split was 42.2 wt%. The ethylene homopolymer withdrawn from the reactor had MFR$_2$ of 514 g/10 min.

The slurry was withdrawn from the loop reactor intermittently and directed to a flash vessel operated at a temperature of 50 °C and a pressure of 3 bar. From there the polymer was directed to a fluidized bed gas phase reactor operated at a pressure of 20 bar and a temperature of 85 °C. Additional ethylene and 1-butene comonomer, nitrogen as inert gas and hydrogen were added so that the molar ratio of hydrogen to ethylene was 15 mol/kmol and the molar ratio of 1-butene to ethylene was 85 mol/kmol. The estimated production split was 55.4 wt%. The polymer had a density of 944.1 kg/m$^3$.

CE1 to CE14

The procedure of IE1 was repeated by changing reactor conditions as described in Table 1.

Table 1 provides details on the production process for the inventive and comparative examples. In addition, table 1 provides numerical values for the following parameters:

- weight-average molecular weight of the LMW fraction ($Mw_{(LMW)}$) (comprising fraction (A) and a fraction obtained during the (optional) prepolymerization step), calculated via the following formula:

$$Mw\ (_{LMW}) = 10^{((\log(MFR2\ (LMW))\ -\ 17,46)/(-3,4))}$$

wherein $MFR_{2(LMW)}$ corresponds to $MFR_{2(loop)}$

- weight-average molecular weight of HMW fraction (comprising fraction (B)) ($Mw_{(HMW)}$) was calculated according to the following formula:

$$M_{W(HMW)} = \frac{M_{W(composition)} - \left(\frac{Split_{Prepol} + Split_A}{100}\right) * M_{W(LMW)}}{\frac{Split_B}{100}};$$

- the C4 content in the HMW fraction was calculated by dividing the comonomer content in the final polymer (determined via NMR) by the amount of the HMW fraction, since - in the examples - the LMW fraction is a homopolymer.

*Compounding of the polyethylene compositions*

The polymer powder of each of the samples IE1 and CE1 to CE14 was mixed under nitrogen atmosphere with 5.5 wt% of carbon black master-batch (CB content 40 wt%), 2500 ppm of antioxidants and 400 ppm Ca-stearate. Then it was compounded and extruded under nitrogen atmosphere to pellets by using a JSW CIMP90 twin screw extruder. Further details on the compounding step are given in table 2 below.

The polymer compositions obtained after the compounding step were extruded into pipes. Details on the properties of the final polymer compositions and pipes are given in table 3. Any result indicated as ">xxx" in table 3, indicates that the respective test was stopped without failure.

Table 1

| | | CE1 | CE2 | CE3 | CE4 | CE5 | IE1 | CE6 | CE7 |
|---|---|---|---|---|---|---|---|---|---|
| **PREPOLY** | | | | | | | | | |
| temperature | °C | 60.0 | 60.0 | 60.0 | 60.0 | 60.0 | 60.0 | 60.0 | 60.0 |
| pressure | bar | 62.3 | 61.1 | 61.1 | 60.3 | 60.2 | 60.3 | 60.3 | 60.2 |
| catalyst feed | g/h | 2.4 | 3.8 | 4.2 | 3.8 | 4.2 | 4.7 | 5.8 | 4.8 |
| cocatalyst feed | g/h | 3.4 | 4.5 | 4.5 | 4.0 | 4.5 | 4.5 | 6.7 | 5.5 |
| antistatic feed | ppm | 10.0 | 10.0 | 10.0 | 10.0 | 10.0 | 10.0 | 10.0 | 10.0 |
| C2 feed | kg/h | 2.0 | 2.0 | 2.0 | 2.0 | 2.0 | 2.0 | 2.0 | 2.0 |
| H2 feed | g/h | 10.4 | 10.4 | 10.5 | 9.0 | 9.9 | 10.3 | 10.3 | 10.0 |
| C3 feed | kg/h | 47.2 | 47.0 | 47.1 | 46.6 | 46.9 | 46.9 | 46.9 | 46.9 |
| production rate | kg/h | 1.9 | 1.9 | 1.9 | 1.9 | 1.9 | 1.9 | 1.9 | 1.9 |
| split | wt-% | 2.8 | 2.3 | 2.3 | 2.8 | 2.6 | 2.4 | 2.8 | 2.8 |
| **LOOP** | | | | | | | | | |
| temperature | °C | 95.0 | 95.0 | 95.0 | 95.0 | 95.0 | 95.0 | 95.0 | 95.0 |
| pressure | bar | 57.6 | 56.4 | 56.4 | 56.3 | 56.5 | 56.8 | 56.8 | 56.7 |
| cocatalyst feed | g/h | 2.4 | 4.5 | 4.5 | 4.1 | 4.5 | 4.6 | 5.8 | 5.1 |
| C2 feed | kg/h | 37.0 | 37.2 | 37.2 | 37.2 | 36.1 | 36.8 | 38.2 | 38.2 |
| H2 feed | g/h | 37.4 | 54.6 | 62.3 | 60.5 | 96.2 | 191.0 | 205.0 | 181.4 |
| C3 feed | kg/h | 96.5 | 91.1 | 93.7 | 89.0 | 90.7 | 90.6 | 90.8 | 90.7 |
| H2/C2 ratio | mol/kmol | 235.5 | 259.5 | 270.2 | 268.4 | 421.0 | 716.6 | 751.6 | 764.7 |
| production rate | kg/h | 35.6 | 35.1 | 34.7 | 35.0 | 33.8 | 34.1 | 35.3 | 35.8 |
| split | wt-% | 51.9 | 42.6 | 42.5 | 52.3 | 46.0 | 42.2 | 52.1 | 52.4 |
| Loop MFR2 | g/10min | 44.8 | 46.1 | 44.5 | 55.1 | 206.9 | 514.1 | 522.0 | 723.1 |
| Mw(LMW) | kg/mol | 44.6 | 44.3 | 44.7 | 42.0 | 28.5 | 21.8 | 21.7 | 19.7 |
| **GPR** | | | | | | | | | |
| temperature | °C | 85.0 | 85.0 | 85.0 | 85.0 | 85.0 | 85.0 | 85.0 | 85.0 |
| pressure | bar | 20.0 | 20.0 | 20.0 | 20.0 | 20.0 | 20.0 | 20.0 | 20.0 |
| C2 feed | kg/h | 33.4 | 62.0 | 63.9 | 37.6 | 51.6 | 58.1 | 40.6 | 40.9 |
| H2 feed | g/h | 9.6 | 56.1 | 37.6 | 0.0 | 25.5 | 9.2 | 2.8 | 12.4 |
| C4 feed | kg/h | 1.2 | 3.0 | 0.9 | 2.3 | 2.0 | 2.5 | 1.2 | 2.9 |
| H2/C2 ratio | mol/kmol | 23.6 | 54.2 | 31.3 | 0.0 | 32.7 | 15.0 | 7.2 | 22.7 |
| C4/C2 ratio | mol/kmol | 57.9 | 82.8 | 23.1 | 120.3 | 69.9 | 85.3 | 58.2 | 131.4 |
| split | wt-% | 45.2 | 55.1 | 55.1 | 44.9 | 51.4 | 55.4 | 45.1 | 44.8 |
| GPR density | kg/m3 | 949.1 | 945.6 | 949.0 | 944.5 | 947.0 | 944.1 | 949.4 | 946.5 |
| C4 in HMW fraction | mol% | 1.04 | 1.11 | 0.45 | 1.76 | 1.07 | 1.32 | 0.95 | 1.96 |
| Mw(HMW) | kg/mol | 433.4 | 314.4 | 421.0 | 498.4 | 370.0 | 371.0 | 479.8 | 341.3 |

## Table 1 - continued

| | | CE8 | CE9 | CE10 | CE11 | CE12 | CE13 | CE14 |
|---|---|---|---|---|---|---|---|---|
| **PREPOLY** | | | | | | | | |
| temperature | °C | 60.0 | 60.0 | 60.0 | 60.0 | 60.0 | 60.0 | 60.0 |
| pressure | bar | 60.0 | 60.0 | 59.0 | 58.8 | 58.8 | 58.8 | 59.0 |
| catalyst feed | g/h | 4.7 | 4.3 | 3.5 | 3.3 | 4.3 | 4.4 | 4.5 |
| cocatalyst feed | g/h | 5.1 | 4.7 | 3.9 | 3.7 | 4.3 | 4.5 | 4.5 |
| antistatic feed | ppm | 10.0 | 10.0 | 13.5 | 10.0 | 10.0 | 10.0 | 10.0 |
| C2 feed | kg/h | 2.0 | 2.0 | 2.0 | 2.0 | 2.0 | 2.0 | 2.0 |
| H2 feed | g/h | 8.9 | 10.7 | 12.1 | 10.6 | 10.9 | 10.6 | 10.9 |
| C3 feed | kg/h | 46.5 | 46.6 | 51.0 | 50.7 | 50.8 | 50.9 | 51.4 |
| production rate | kg/h | 1.9 | 1.9 | 1.9 | 1.9 | 1.9 | 1.9 | 1.9 |
| split | wt-% | 2.3 | 2.5 | 2.9 | 2.3 | 2.3 | 2.8 | 2.4 |
| **LOOP** | | | | | | | | |
| temperature | °C | 95.0 | 95.0 | 95.0 | 95.0 | 95.0 | 95.0 | 95.0 |
| pressure | bar | 56.5 | 56.6 | 54.8 | 54.8 | 54.9 | 54.9 | 54.8 |
| cocatalyst feed | g/h | 5.1 | 4.6 | 3.9 | 3.7 | 4.3 | 4.5 | 4.5 |
| C2 feed | kg/h | 38.3 | 38.3 | 36.7 | 37.3 | 38.4 | 38.4 | 39.3 |
| H2 feed | g/h | 180.0 | 90.5 | 64.1 | 69.9 | 167.7 | 167.3 | 106.3 |
| C3 feed | kg/h | 88.6 | 88.5 | 91.5 | 88.6 | 91.0 | 90.2 | 92.4 |
| H2/C2 ratio | mol/kmol | 758.9 | 440.0 | 247.1 | 245.1 | 637.6 | 658.7 | 405.2 |
| production rate | kg/h | 36.0 | 36.3 | 34.4 | 35.1 | 35.9 | 36.0 | 36.9 |
| split | wt-% | 43.3 | 47.3 | 52.5 | 42.7 | 43.3 | 52.3 | 48.0 |
| Loop MFR2 | g/10min | 664.7 | 171.0 | 53.5 | 46.2 | 528.0 | 548.8 | 176.6 |
| Mw$_{(LMW)}$ | kg/mol | 20.2 | 30.1 | 42.4 | 44.2 | 21.6 | 21.4 | 29.8 |
| **GPR** | | | | | | | | |
| temperature | °C | 85.0 | 85.0 | 85.0 | 85.0 | 85.0 | 85.0 | 85.0 |
| pressure | bar | 20.0 | 20.0 | 20.0 | 20.0 | 20.0 | 20.0 | 20.0 |
| C2 feed | kg/h | 62.6 | 48.0 | 39.7 | 63.9 | 56.6 | 38.0 | 48.5 |
| H2 feed | g/h | 86.8 | 21.8 | NA | 117.7 | 12.1 | 16.1 | 31.7 |
| C4 feed | kg/h | 1.4 | 2.6 | 1.7 | 2.1 | 1.1 | 2.0 | 2.5 |
| H2/C2 ratio | mol/kmol | 74.2 | 24.6 | NA | 56.2 | 10.9 | 25.0 | 31.4 |
| C4/C2 ratio | mol/kmol | 33.9 | 84.8 | 56.4 | 41.5 | 29.2 | 85.0 | 81.7 |
| split | wt-% | 54.4 | 50.2 | 44.5 | 54.9 | 54.4 | 45.0 | 49.6 |
| GPR density | kg/m3 | 952.0 | 948.2 | 948.2 | 949.1 | 948.7 | 949.5 | 947.0 |
| C4 in HMW fraction | mol% | 0.55 | 1.20 | 0.99 | 0.64 | 0.62 | 1.36 | 1.31 |
| Mw$_{(HMW)}$ | kg/mol | 344.0 | 362.0 | 582.1 | 335.5 | 569.1 | 402.8 | 380.2 |

## Table 2

| | | CE1 | CE2 | CE3 | CE4 | CE5 | IE1 | CE6 | CE7 |
|---|---|---|---|---|---|---|---|---|---|
| feed | kg/h | 283.1 | 262.6 | N/A | 283.0 | 254.5 | 249.5 | 232.0 | 229.8 |
| screw speed | rpm | 400.7 | 385.4 | N/A | 399.7 | 399.8 | 399.9 | 349.8 | 452.6 |
| throttle valve opening | mm | 10.0 | 10.0 | N/A | 13.4 | 13.5 | 13.5 | 13.4 | 13.5 |
| SEI | kWh/ t | 230.0 | 228.8 | N/A | 264.6 | 228.0 | 227.0 | 254.9 | 228.3 |
| melt temperature | °C | 266.7 | 259.5 | N/A | 275.7 | 258.3 | 254.3 | 271.4 | 256.8 |

Table 1 - continued

|  |  | CE8 | CE9 | CE10 | CE11 | CE12 | CE13 | CE14 |
|---|---|---|---|---|---|---|---|---|
| feed | kg/h | 228.8 | 231.1 | 231.8 | 231.2 | 229.6 | 229.4 | 230.2 |
| screw speed | rpm | 450.7 | 449.8 | 399.7 | 399.8 | 399.7 | 399.9 | 399.8 |
| throttle valve opening | mm | 13.5 | 13.5 | 15.4 | 15.5 | 15.5 | 15.5 | 15.6 |
| SEI | kWh/ t | 231.2 | 237.3 | 251.2 | 232.5 | 240.8 | 207.1 | 209.1 |
| melt temperature | °C | 268.2 | 262.6 | 265.2 | 261.8 | 266.4 | 248.3 | 248.1 |

Table 2

|  |  | CE1 | CE2 | CE3 | CE4 | CE5 | IE1 | CE6 | CE7 |
|---|---|---|---|---|---|---|---|---|---|
| Mn | kg/mol | 11.2 | 12.4 | 14.7 | 13.3 | 9.3 | 8.1 | 7.5 | 6.4 |
| Mw | kg/mol | 220.5 | 193.0 | 252.2 | 246.7 | 204.0 | 215.3 | 228.1 | 163.8 |
| Mz | kg/mol | 1234. 8 | 874.7 | 1073. 5 | 1151. 9 | 930.7 | 909.0 | 980.4 | 840.2 |
| Final MFR5 | g/10min | 0.46 | 0.67 | 0.18 | 0.31 | 0.32 | 0.19 | 0.23 | 0.65 |
| Final MFR21 | g/10min | 13.0 | 12.0 | 4.0 | 8.8 | 8.1 | 4.9 | 7.3 | 21.0 |
| FRR21/5 |  | 28.26 | 17.91 | 22.22 | 28.39 | 25.31 | 25.79 | 31.74 | 32.31 |
| Density pellet | kg/m3 | 960.6 | 957.5 | 961.4 | 957.7 | 959.8 | 956.2 | 961.3 | 958.9 |
| Final C4 | mol% | 0.47 | 0.61 | 0.25 | 0.79 | 0.55 | 0.73 | 0.43 | 0.88 |
| WSR |  | 5.7 | 0.9 | 0.3 | 3.9 | 2.3 | 1.4 | 1.7 | 1.8 |
| NPT | hours | 396 | 554 | 192 | 4709 | 1400 | >1300 0 | 2244 | 307 |
| PENT | hours | 92 | 44 | 58 | 3245 | 706 | >7844 | 4124 | >7984 |
| Tc | °C | -8 | -6 | -30 | -12 | -8 | -12 | -8 | 2 |
| Cryst. Half time @123°C | Min | 5.8 | 7.8 | 4.8 | 7.9 | 10.1 | 20.4 | 11.8 | 12.3 |
| Eta747 | kPa*s | 409.7 | 116.0 | 565.7 | 389.5 | 349.3 | 737.3 | 486.2 | 211.8 |
| SHI (2.7/210) |  | 67 | 20 | 29 | 56 | 39 | 42 | 52 | 66 |
| PI | Pa$^{-1}$ | 3.56 | 1.63 | 2.01 | 3.15 | 2.44 | 2.48 | 2.79 | 3.30 |
| STPR(12.4MPa/ 20°C) | hours | 204 | 52 | 1669 | 41 | 132 | 67 | 353 | 83 |
| STPR (5.5MPA/ 80°C) | hours | 1060 | 1562 | 588 | 101 | 4266 | 196 | 3011 | 5 |

Table 3 - continued

|  |  | CE8 | CE9 | CE10 | CE11 | CE12 | CE13 | CE14 |
|---|---|---|---|---|---|---|---|---|
| Mn | kg/mol | 7.5 | 8.1 | 10.7 | 12.6 | 8.2 | 6.8 | 9.3 |
| Mw | kg/mol | 196.4 | 196.7 | 282.3 | 204.3 | 319.7 | 192.9 | 203.5 |
| Mz | kg/mol | 995.8 | 973.4 | 1688.3 | 1113.8 | 1614.8 | 1143.4 | 1139.3 |
| Final MFR5 | g/10mi n | 0.62 | 0.37 | 0,20 | 0, 35 | 0,09 | 0, 55 | 0,41 |
| Final MFR21 | g/10mi n | 14.0 | 11.0 | 6,6 | 8,8 | 3,0 | 18,0 | 11 0 |

(continued)

| | | CE8 | CE9 | CE10 | CE11 | CE12 | CE13 | CE14 |
|---|---|---|---|---|---|---|---|---|
| FRR21/5 | | 22.58 | 29.73 | 33,0 | 25,1 | 33,3 | 32,7 | 26,8 |
| Density pellet | kg/m3 | 964.0 | 957.6 | 961,0 | 961,8 | 961,5 | 962,5 | 959,2 |
| Final C4 | mol% | 0.30 | 0.60 | 0.44 | 0.35 | 0.34 | 0.61 | 0.65 |
| WSR | | 0 | 3.9 | 5.7 | 0 | 2.2 | 2.4 | 0.5 |
| NPT | hours | 23 | 1657 | 3473 | 60 | 1562 | 570 | 728 |
| PENT | hours | 6 | 2927 | 3287 | 16 | 2164 | 2058 | 966 |
| Tc | °C | -4 | -4 | -14 | -23 | -25 | 5 | -5 |
| Cryst. Half time @123°C | Min | 8.4 | 9.7 | 4.6 | 3.7 | 6.7 | 7.6 | 6.7 |
| Eta747 | kPa*s | 132 | 339 | 866 | 242 | 1400 | 262 | 252 |
| SHI (2.7/210) | | 37.31 | 56.11 | 92.9 | 35.7 | 65.6 | 84.2 | 47.8 |
| PI | Pa$^{-1}$ | 2.39 | 3.02 | 3.85 | 2.33 | 2.87 | 3.69 | 2.76 |
| STPR (12.4MPa/ 20°C) | hours | 1508 | 207 | 434 | 528 | 5759 | 450 | 197 |
| STPR (5.5MPA/ 80°C) | hours | 310 | 1756 | >1800 | 279 | >1800 | 161 | 1200 |

From the above Table 3, one can see that the combination of very high stress cracking resistance, as measured by the notched pipe test, NPT, with good performance in pressure test can only be achieved by the inventive example. None of the comparative example achieves the failure times in the NPT test above one year. This demonstrates that a careful selection of polymer design parameters needs to be made in order to arrive to the desired outcome.

## Claims

1. A polyethylene composition comprising a base resin which comprises from 42 to 48 wt.% of a first ethylene homo- or copolymer fraction (A), and from 52 to 58 wt.% of a second ethylene copolymer fraction (B), based on the total weight of the base resin, wherein fraction (A) has a lower weight-average molecular weight than fraction (B); wherein fraction (B) comprises from 1.2 to 1.6 mol% of 1-butene as a comonomer, based on the total amount of fraction (B); and wherein the composition has a number average molecular weight of from 6000 to 10000 g/mol determined by Gel Permeation Chromatography (GPC) according to ISO 16014-4:2003 and ASTM D 6474-99.

2. Polyethylene composition according to claim 1, wherein fraction (A) has a MFR$_2$, determined according to ISO1133, in a range of from 50 to 1000 g/1min; and/ or wherein the composition has a MFR$_5$, determined according to ISO1133, in a range of from 0.15 to 0.30 g/10min.

3. Polyethylene composition according to anyone of the preceding claims, wherein said second ethylene copolymer fraction (B) has a weight average molecular weight in a range of from 200 to 500 kg/mol.

4. Polyethylene composition according to anyone of the preceding claims, wherein the base resin is bimodal and/ or wherein said second ethylene copolymer fraction (B) is monomodal.

5. Polyethylene composition according to anyone of the preceding claims, wherein the composition has a ratio Mz to Mw is in a range of from 1.0 to 8.0, determined by Gel Permeation Chromatography (GPC) according to ISO 16014-4:2003 and ASTM D 6474-99.

6. Polyethylene composition according to anyone of the preceding claims, wherein the composition has a critical temperature (Tc) of less than -5°C determined according to ISO 13477:2008 .

7. Polyethylene composition according to anyone of the preceding claims, wherein the composition has a viscosity at a shear stress of 747 Pa, $\varepsilon$747, determined according to ISO 6721-10:1999, in a range of 400 kPa*s or more and/ or having a complex viscosity SHI (2.7/210) in a range of from 30 to 50.

8. Polyethylene composition according to anyone of the preceding claims, wherein the composition has a crystallization half time at 123°C of at least 10 minutes.

9. Polyethylene composition according to anyone of the preceding claims, wherein the base resin has a density in a range of less than 949 kg/m$^3$.

10. Polyethylene composition according to anyone of the preceding claims, wherein the composition has a slow crack propagation resistance, determined on compression moulded specimen according to the PENT test procedure at a stress of 2.8 MPa at 80°C of at least 7500 hours.

11. Process for producing a polyethylene composition according to anyone of claims 1 to 10 comprising the steps of:

   a) polymerizing in a first step ethylene and, optionally one or more alpha-olefin comonomers, in the presence of a polymerization catalyst to obtain a first ethylene homo- or copolymer fraction (A);
   b) polymerizing in a second step ethylene and one or more alpha-olefin comonomers, in the presence of a polymerization catalyst to obtain a second ethylene copolymer fraction (B) having a higher weight average molecular weight than fraction (A);

   wherein the first polymerization step (a) and the second polymerization step (b) are conducted in any order.

12. Process according to claim 11, wherein the polymerization catalyst is a Ziegler-Natta catalyst.

13. Use of a polyethylene composition according to anyone of claims 1 to 10 or obtainable by a process according to anyone of claims 11 or 12 for increasing slow crack resistance of a pipe or fitting.

14. Article comprising a polyethylene composition according to anyone of claims 1 to 10 or obtainable by a process according to anyone of claims 11 or 12, wherein the article is preferably a polyethylene pipe or fitting.

15. Article according to claim 14, wherein the article is a polyethylene pipe and meets one or more of the following requirements:

   - NPT > 8760 hours;
   - STPR (5.5 MPa/ 80°C) > 150 hours;
   - STPR (12.4 MPa/ 20°C) > 50 hours.

Europäisches
Patentamt

European
Patent Office

Office européen
des brevets

# EUROPEAN SEARCH REPORT

**Application Number**

EP 22 21 6787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 095 102 B1 (BOREALIS TECH OY [FI]) 8 September 2004 (2004-09-08) | 1-4,6,9, 11-14 | INV. C08F110/02 |
| A | * paragraphs [0001], [0004], [0016] * * examples 1, 2 * * claims 1-15 * | 5,7,8, 10,15 | C08F210/16 C08L23/08 |
| A | EP 1 927 626 B1 (BOREALIS TECH OY [FI]) 28 October 2009 (2009-10-28) * paragraphs [0001], [0009] * * Comparative Example 1 * * claims 1-13 * | 1-15 | |

**TECHNICAL FIELDS
SEARCHED        (IPC)**

C08F
C08L

The present search report has been drawn up for all claims

| Place of search | Date of completion of the search | Examiner |
|---|---|---|
| Munich | 31 May 2023 | Neumeier, Michael |

EPO FORM 1503 03.82 (P04C01)

**EP 4 393 967 A1**

## ANNEX TO THE EUROPEAN SEARCH REPORT
## ON EUROPEAN PATENT APPLICATION NO.

EP 22 21 6787

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2023

| Patent document cited in search report | | Publication date | Patent family member(s) | | Publication date |
|---|---|---|---|---|---|
| EP 1095102 | B1 | 08-09-2004 | AT | 275605 T | 15-09-2004 |
| | | | AU | 740908 B2 | 15-11-2001 |
| | | | BR | 9911868 A | 27-03-2001 |
| | | | CN | 1307612 A | 08-08-2001 |
| | | | CZ | 295900 B6 | 16-11-2005 |
| | | | DE | 69920021 T2 | 20-01-2005 |
| | | | DK | 1095102 T3 | 29-11-2004 |
| | | | EP | 1095102 A1 | 02-05-2001 |
| | | | ES | 2224684 T3 | 01-03-2005 |
| | | | HU | 0102621 A2 | 28-11-2001 |
| | | | IL | 140116 A | 31-08-2005 |
| | | | JP | 4577988 B2 | 10-11-2010 |
| | | | JP | 2002519496 A | 02-07-2002 |
| | | | KR | 20010053384 A | 25-06-2001 |
| | | | PT | 1095102 E | 30-11-2004 |
| | | | RU | 2223987 C2 | 20-02-2004 |
| | | | TR | 200100152 T2 | 23-07-2001 |
| | | | US | 6878784 B1 | 12-04-2005 |
| | | | WO | 0001765 A1 | 13-01-2000 |
| | | | ZA | 200007701 B | 21-06-2001 |
| EP 1927626 | B1 | 28-10-2009 | AT | 446985 T | 15-11-2009 |
| | | | AU | 2007324878 A1 | 05-06-2008 |
| | | | CA | 2669416 A1 | 05-06-2008 |
| | | | CN | 101573407 A | 04-11-2009 |
| | | | EP | 1927626 A1 | 04-06-2008 |
| | | | ES | 2331922 T3 | 20-01-2010 |
| | | | KR | 20090077017 A | 13-07-2009 |
| | | | PL | 1927626 T3 | 31-03-2010 |
| | | | RU | 2009120117 A | 10-01-2011 |
| | | | US | 2010075087 A1 | 25-03-2010 |
| | | | WO | 2008064809 A1 | 05-06-2008 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0022040 A
- US 4582816 A
- US 3405109 A
- US 3324093 A
- EP 479186 A
- US 5391654 A
- US 5026795 A
- US 4803251 A
- US 4532311 A
- US 4855370 A
- EP 560035 A

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **J. RANDALL.** *Macromol. Sci., Rev. Macromol. Chem. Phys.,* 1989, vol. C29, 201
- Encyclopedia of Polymer Science and Engineering. vol. 14, 492-509